# EUROPÄISCHE PATENTSCHRIFT

(11) **EP 2 099 637 B1**
(45) Veröffentlichungstag und Bekanntmachung des Hinweises auf die Patenterteilung: **11.09.2019**
(21) Anmeldenummer: 07847830.2
(22) Anmeldetag: 05.12.2007
(51) Int. Cl.: H02H 5/04, H02H 11/00

(54) **VORRICHTUNG ZUR STEUERUNG DER ARBEITSWEISE EINER ELEKTRISCHEN SCHALTUNG IN EINEM KRAFTFAHRZEUG**
DEVICE FOR CONTROLLING THE MODE OF OPERATION OF AN ELECTRIC CIRCUIT IN A MOTOR VEHICLE
DISPOSITIF POUR COMMANDER LE MODE DE FONCTIONNEMENT D'UN MONTAGE ÉLECTRIQUE DANS UN VÉHICULE AUTOMOBILE

(30) Priorität: 08.12.2006 DE 102006057931
(43) Veröffentlichungstag der Anmeldung: 16.09.2009
(73) Patentinhaber: SEG Automotive Germany GmbH, 70499 Stuttgart (DE)
(72) Erfinder: HERZ, Michael, 70469 Stuttgart (DE); SUELZLE, Helmut, 71691 Freiberg (DE)
(74) Vertreter: Steinbauer, Florian
(86) Internationale Anmeldenummer: PCT/EP2007/063335
(87) Internationale Veröffentlichungsnummer: WO 2008/068275

(56) Entgegenhaltungen:
- EP-A- 1 134 870
- EP-A- 1 244 197
- DE-A1- 4 243 710
- DE-A1- 10 257 379

## Beschreibung

Die Erfindung betrifft eine Vorrichtung zur Steuerung der Arbeitsweise einer elektrischen Schaltung in einem Kraftfahrzeug.

### Stand der Technik

Aus der DE 197 12 445 A1 ist ein System zur Steuerung und/oder Regelung von Betriebsabläufen bei einem Kraftfahrzeug bekannt. Bei diesem bekannten System sind eine die Betriebsabläufe steuernde und/oder regelnde elektronische Schaltung sowie Temperaturerfassungsmittel vorgesehen. Die Temperaturerfassungsmittel sind wenigstens mit Teilen der elektronischen Schaltung in thermischem Kontakt und erfassen einen die Temperatur dieses Teils repräsentierenden Temperaturwert. Des Weiteren sind Mittel vorgesehen, mittels derer erkannt wird, ob der Temperaturwert wenigstens einen von wenigstens zwei unterschiedlichen Schwellwerten überschreitet. Ist dies der Fall, dann werden unterschiedliche Maßnahmen eingeleitet, je nachdem, welcher der unterschiedlichen Schwellwerte überschritten wird. Beispielsweise werden bei einer erkannten Überschreitung eines ersten, niedrigeren Schwellwertes die Betriebsabläufe auf solche Betriebsabläufe beschränkt, die weniger Wärme produzieren oder eine geringere Verlustleistung aufweisen, und bei einer erkannten Überschreitung eines zweiten, höheren Schwellwertes Teile der Schaltung, insbesondere Endstufenschaltungen und/oder digitale Schaltungsteile, außer Betrieb gesetzt, wobei für die außer Betrieb gesetzten Teile ein Notlauf, insbesondere ein mechanischer, hydraulischer und/oder elektrischer Notlauf, vorgesehen ist.

Aus der EP 1134870 A2 ist eine Vorrichtung nach dem Oberbegriff von Anspruch 1 bekannt. Bei einer leeren oder defekten Batterie werden Notmassnahmen getroffen, welche dazu führen, dass nur noch wenige wichtige Verbraucher ein- bzw. zugeschaltet bleiben.

### Vorteile der Erfindung

Eine Vorrichtung mit den im Anspruch 1 angegebenen Merkmalen weist demgegenüber den Vorteil auf, dass eine Umschaltung in die Schutzbetriebsart nur nach einer Plausibilitätsprüfung vorgenommen wird. Dadurch wird verhindert, dass unerwünschte Einflüsse, beispielsweise EMV-Einkopplungen oder ein Übersprechen von Signalen auf andere Leitungen, eine Umschaltung in die Schutzbetriebsart auslösen, obwohl dies gar nicht nötig wäre. Eine derartige unerwünschte Umschaltung in die Schutzbetriebsart hätte zur Folge, dass die elektrische Schaltung für einen längeren Zeitraum nur eingeschränkt oder gar nicht arbeitet. Diese negativen Folgen werden gemäß der vorliegenden Erfindung verhindert.

Die vorstehend beschriebenen Vorteile werden dadurch erreicht, dass die Steuereinheit der Vorrichtung aufeinanderfolgende Parameterwerte eines vorgegebenen Parameters, vorzugsweise der Temperatur, des Stromes oder der Spannung, überwacht und die elektrische Schaltung nur dann in die Schutzbetriebsart umschaltet, wenn vor dem Überschreiten des ersten Grenzwertes erfasste Parameterwerte ein vorgegebenes Kriterium erfüllen. Beispielsweise wird überprüft, ob die gemessene Temperatur, bevor sie den ersten Grenzwert überschreitet, einen vorgegebenen Temperaturbereich durchlaufen hat.

Zu diesem Zweck wird vorzugsweise der Temperaturbereich unterhalb der Grenztemperatur, die dem ersten Grenzwert entspricht, in mehrere kleine Temperaturbereiche unterteilt. Im Falle eines Temperaturanstiegs wird jeweils eine Temperaturbereichskennung gesetzt und abgespeichert, wenn die gemessene Temperatur im jeweils zugehörigen kleineren Temperaturbereich liegt. Überschreitet die gemessene Temperatur schließlich die Grenztemperatur, dann erfolgt durch eine Auswertung der abgespeicherten Temperaturbereichskennungen eine Plausibilitätsprüfung. Hat diese ein positives Ergebnis, dann erfolgt eine Umschaltung in die Schutzbetriebsart. Hat diese ein negatives Ergebnis, dann unterbleibt eine sofortige Umschaltung in die Schutzbetriebsart.

Erfindungsgemäß überprüft die Steuereinheit auch während der Schutzbetriebsart die Parameterwerte des vorgegebenen Parameters und schaltet die elektrische Schaltung in ihren Normalbetrieb zurück, wenn die während der Schutzbetriebsart erfassten Parameterwerte ein vorgegebenes zweites Kriterium erfüllen. Dies hat den Vorteil, dass die elektrische Schaltung in ihren Normalbetrieb zurückgeführt wird, sobald die für die Schutzbetriebsart notwendigen Voraussetzungen nicht mehr vorliegen. Durch diese frühzeitige Rückschaltung in den Normalbetrieb wird eine lang andauernde Funktionseinschränkung oder gar ein lang andauernder Funktionsausfall der elektrischen Schaltung vermieden.

Weitere vorteilhafte Eigenschaften der Erfindung ergeben sich aus deren beispielhafter Erläuterung anhand der Zeichnung.

### Zeichnung

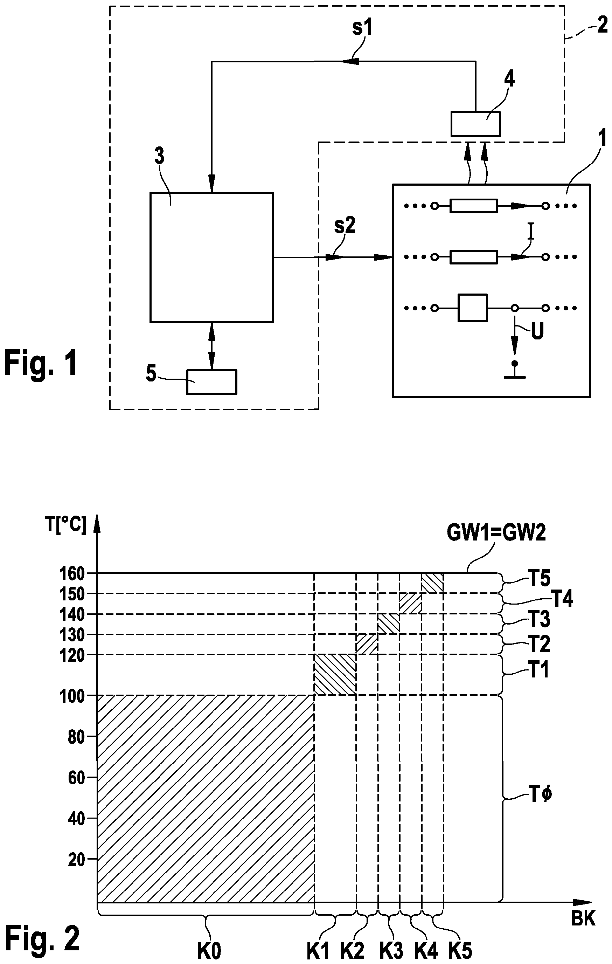

Die Figur 1 zeigt ein Blockschaltbild einer Vorrichtung zur Steuerung der Arbeitsweise einer elektrischen Schaltung in einem Kraftfahrzeug. Die Figur 2 zeigt ein Diagramm zur Erläuterung eines Ausführungsbeispiels für eine erfindungsgemäße Plausibilitätsprüfung.

### Beschreibung

Die Figur 1 zeigt ein Blockschaltbild einer Vorrichtung zur Steuerung der Arbeitsweise einer elektrischen Schaltung in einem Kraftfahrzeug.

Die dargestellte Vorrichtung weist eine in einem Kraftfahrzeug angeordnete elektrische Schaltung 1 auf. Bei dieser elektrischen Schaltung 1 handelt es sich beispielsweise um einen Generatorregler, welcher eine oder mehrere Transistorendstufen aufweist. Transistorendstufen sind sowohl wärmeabgebende als auch wärmeempfindliche Schaltungsteile. Wird die Umgebungstemperatur einer Transistorendstufe zu hoch, dann können sowohl die Transistorendstufe selbst als auch in deren Umgebung angeordnete weitere Schaltungsteile zerstört werden.

Um dies zu verhindern, ist eine Schutzschaltung 2 vorgesehen. Diese weist einen Temperatursensor 4 auf, welcher Sensorsignale s1, die Temperaturwerten entsprechen, an eine Steuereinheit 3 der Schutzschaltung 2 überträgt. Der Temperatursensor 4 ist thermisch mit der elektrischen Schaltung 1 gekoppelt und daher dazu in der Lage, in der elektrischen Schaltung 1 herrschende Temperaturwerte zu erfassen.

Die Steuereinheit 3 empfängt die vom Temperatursensor 4 bereitgestellten Sensorsignale, die Temperaturwerten entsprechen, und überprüft diese dahingehend, ob sie einen vorgegebenen ersten Grenzwert übersteigen. Übersteigt ein erfasster Temperaturwert den vorgegebenen ersten Grenzwert, dann wird eine Plausibilitätsprüfung vorgenommen. Liefert diese ein positives Ergebnis, dann führt die Steuereinheit 3 der elektrischen Schaltung 1 ein Steuersignal s2 zu, welches die elektrische Schaltung in eine Schutzbetriebsart umschaltet. Liefert die Plausibilitätsprüfung hingegen ein negatives Ergebnis, dann unterbleibt eine sofortige Umschaltung in die Schutzbetriebsart und die Überwachung der Temperaturwerte wird fortgesetzt.

Die Figur 2 zeigt ein Diagramm zur Erläuterung eines Ausführungsbeispiels für eine erfindungsgemäße Plausibilitätsprüfung.

In diesem Diagramm sind längs der Abszisse Bereichskennungen und längs der Ordinate die Temperatur aufgetragen. Insbesondere ist der dargestellte Temperaturbereich in kleinere Temperaturbereiche T0, T1, T2, T3, T4 und T5 unterteilt. Der Temperaturbereich T0 reicht von 0°C bis 100°C, der Temperaturbereich T1 von 100°C bis 120°C, der Temperaturbereich T2 von 120°C bis 130°C, der Temperaturbereich T3 von 130°C bis 140°C, der Temperaturbereich T4 von 140°C bis 150°C und der Temperaturbereich T5 von 150°C bis 160°C. Der erste Temperaturgrenzwert GW1, bei dessen Überschreiten die elektrische Schaltung 1 vom Normalbetrieb in ihre Schutzbetriebsart umgeschaltet wird, liegt beim gezeigten Ausführungsbeispiel bei 160°C.

Wie durch die Schraffuren in der Figur 2 angedeutet ist, ist dem Temperaturbereich T0 eine Bereichskennung K0 zugeordnet, dem Temperaturbereich T1 eine Bereichskennung K1, dem Temperaturbereich T2 eine Bereichskennung K2, dem Temperaturbereich T3 eine Bereichskennung K3, dem Temperaturbereich T4 eine Bereichskennung K4 und dem Temperaturbereich T5 eine Bereichskennung K5.

Bei der weiteren Erläuterung wird davon ausgegangen, dass die normale Arbeitstemperatur der elektrischen Schaltung 1 im Bereich zwischen 80°C und 100°C liegt. In diesem Normalbetrieb wird in vorgegebenen Zeitabständen mittels des Temperatursensors 4 der jeweils vorliegende momentane Temperaturwert erfasst und in Form des Sensorsignals s1 an die Steuereinheit 3 übermittelt. Diese ordnet dem ihr jeweils übermittelten Temperaturwert die jeweils zugehörige Bereichskennung zu und speichert diese in einem Speicher 5 ab. Solange in der elektrischen Schaltung die vorstehend genannte normale Arbeitstemperatur herrscht, ist im Speicher 5 lediglich die Bereichskennung K0 abgespeichert und die elektrische Schaltung 1 arbeitet weiter im Normalbetrieb.

Kommt es beispielsweise aufgrund einer starken Belastung der in der elektrischen Schaltung 1 vorgesehenen Endstufen zu einem Temperaturanstieg, dann durchläuft der gemessene Temperaturwert nacheinander die Temperaturbereiche T1, T2, T3, T4 und T5. Sobald der Temperatursensor 4 einen Temperaturwert liefert, der im Temperaturbereich T1 liegt, ordnet die Steuereinheit 3 diesem Temperaturwert die Bereichskennung K1 zu und speichert diese im Speicher 5 ab. Liefert der Temperatursensor bei weiter steigender Temperatur danach einen Temperaturwert, der im Temperaturbereich T2 liegt, dann ordnet die Steuereinheit 3 diesem Temperaturwert die Bereichskennung K2 zu und speichert diese im Speicher 5 ab. Steigen dann die vom Temperatursensor erfassen Temperaturwerte weiter an, so werden auf entsprechende Weise nacheinander auch die Bereichskennungen K3, K4 und K5 im Speicher 5 abgespeichert.

Überschreitet in weiterer Folge ein vom Temperatursensor 4 erfasster Temperaturwert den ersten Grenzwert GW1 (160°C), dann führt die Steuereinheit 3 eine Plausibilitätsprüfung durch, bei welcher sie anhand der im Speicher 5 abgespeicherten Bereichskennungen überprüft, ob die vor dem Überschreiten des ersten Grenzwertes gemessenen Temperaturwerte die Temperaturbereiche T1, T2, T3, T4 und T5 durchlaufen haben.

Erkennt sie, dass dies der Fall ist, dann hat die Plausibilitätsprüfung ein positives Ergebnis und die Steuereinheit 3 führt der elektrischen Schaltung 1 ein Steuersignal s2 zu, aufgrund dessen die elektrische Schaltung 1 in ihre Schutzbetriebsart umgeschaltet wird.

Erkennt sie hingegen, dass dies nicht der Fall ist, dann hat die Plausibilitätsprüfung ein negatives Ergebnis und die Steuereinheit 3 führt der elektrischen Schaltung 1 ein Steuersignal s2 zu, aufgrund dessen die elektrische Schaltung 1 im Normalbetrieb verbleibt.

Alternativ zu dem vorstehend beschriebenen Ausführungsbeispiel, bei welchem eine aufeinanderfolgende Abspeicherung von einzelnen Bereichskennungen im Speicher 5 vorgenommen wird, können gemäß einem weiteren Ausführungsbeispiel die Bereichskennungen Zählwerte sein. Beispielsweise entspricht die Bereichskennung K0 dem Zählwert 0, die Bereichskennung K1 dem Zählwert 1, die Bereichskennung K2 dem Zählwert 2, die Bereichskennung K3 dem Zählwert 3, die Bereichskennung K4 dem Zählwert 4 und die Bereichskennung K5 dem Zählwert 5. Steigt bei diesem Ausführungsbeispiel der gemessene Temperaturwert beginnend im Temperaturbereich T0 stetig an, dann wird der zuerst im Speicher 5 gespeicherte Zählwert 0 zunächst durch den Zählwert 1, dann durch den Zählwert 2, usw., ersetzt, bis schließlich der Zählwert 5 im Speicher 5 abgespeichert ist. Überschreitet dann der erfasste Temperaturwert den ersten Grenzwert GW1, dann überprüft die Steuerschaltung 3, ob im Speicher 5 der Zählwert 5 gespeichert ist oder nicht.

Erkennt sie, dass dies der Fall ist, dann hat die Plausibilitätsprüfung ein positives Ergebnis und die Steuereinheit 3 führt der elektrischen Schaltung 1 ein Steuersignal s2 zu, aufgrund dessen die elektrische Schaltung 1 in ihre Schutzbetriebsart umgeschaltet wird.

Erkennt sie hingegen, dass dies nicht der Fall ist, dann hat die Plausibilitätsprüfung ein negatives Ergebnis und die Steuereinheit 3 führt der elektrischen Schaltung 1 ein Steuersignal s2 zu, aufgrund dessen die elektrische Schaltung 1 im Normalbetrieb verbleibt.

Gemäß der Erfindung überprüft die Steuereinheit 3 auch während der Schutzbetriebsart die vom Temperatursensor 4 erfassten Temperaturwerte und schaltet die elektrische Schaltung 1 in ihren Normalbetrieb zurück, wenn die während der Schutzbetriebsart erfassten Temperaturwerte ein vorgegebenes weiteres Kriterium erfüllen.

Beispielsweise überprüft die Steuereinheit 3, ob ein oder mehrere aufeinanderfolgende, während der Schutzbetriebsart gemessene Temperaturwerte einen zweiten Grenzwert GW2 unterschreiten. Bei dem in der Figur 2 gezeigten Ausführungsbeispiel hat der zweite Grenzwert GW2 denselben Wert wie der erste Grenzwert GW1. Er kann aber auch einen anderen, vorzugsweise höheren Wert aufweisen. Hierbei kann auch mit einer Hysterese gearbeitet werden.

Erkennt die Steuereinheit 3, dass der oder die genannten Temperaturwerte den zweiten Grenzwert GW2 unterschreiten und im Temperaturbereich T5 liegen, dann schaltet die Steuereinheit 3 die elektrische Schaltung 1 wieder in ihren Normalbetrieb zurück. Ergibt eine nachfolgende Messung, dass der oder die genannten Temperaturwerte weiter absinken und im Temperaturbereich T4 liegen, dann löscht die Steuereinheit 3 im Speicher 5 die dem Temperaturbereich T5 zugeordnete Bereichskennung bzw. reduziert den dort gespeicherten Zählwert um eine Stufe, usw.

Erkennt die Steuereinheit 3 hingegen, dass die während der Schutzbetriebsart erfassten Temperaturwerte weiterhin oberhalb des Grenzwertes GW2 liegen, dann verbleibt die elektrische Schaltung 1 in ihrer Schutzbetriebsart.

Dies hat den Vorteil, dass die elektrische Schaltung 1 sobald wie möglich wieder in ihren Normalbetrieb zurückgeschaltet wird, so dass die Funktionseinschränkungen der elektrischen Schaltung oder gar deren Funktionsausfall nur solange bestehen, wie dies unbedingt notwendig ist.

Bei den vorstehend beschriebenen Ausführungsbeispielen wurde als vorgegebener Parameter die Temperatur verwendet. Alternativ dazu kann es sich bei dem vorgegebenen Parameter auch um einen in der elektrischen Schaltung 1 fließenden Strom I oder um eine in der elektrischen Schaltung 1 abgreifbare Spannung U handeln. Dies ist in der Figur 1 durch eine entsprechende Kennzeichnung veranschaulicht.

## Patentansprüche

1. Vorrichtung zur Steuerung der Arbeitsweise einer elektrischen Schaltung in einem Kraftfahrzeug, mit
- einer Schutzschaltung (2), welche eine Erfassungseinheit (4) und eine Steuereinheit (3) aufweist, wobei
- die Erfassungseinheit (4) zur Erfassung der Parameterwerte eines vorgegebenen Parameters während des Normalbetriebes der elektrischen Schaltung vorgesehen ist und
- die Steuereinheit (3) die elektrische Schaltung (1) vom Normalbetrieb in eine, eine Funktionseinschränkung der elektrischen Schaltung bewirkende Schutzbetriebsart umschaltet, wenn der von der Erfassungseinheit (4) erfasste Parameterwert einen vorgegebenen ersten Grenzwert (GW1) überschreitet, wobei
- die Steuereinheit (3) aufeinanderfolgende Parameterwerte des vorgegebenen Parameters überwacht und
- die elektrische Schaltung (1) nur dann in die Schutzbetriebsart umschaltet, wenn vor dem Überschreiten des ersten Grenzwertes (GW1) erfasste Parameterwerte ein vorgegebenes Kriterium erfüllen, **dadurch gekennzeichnet, dass** die Steuereinheit (3) auch während der Schutzbetriebsart von der Erfassungseinheit (4) erfasste Parameterwerte des vorgegebenen Parameters überprüft und die elektrische Schaltung (1) in ihren Normalbetrieb rückschaltet, wenn die während der Schutzbetriebsart erfassten Parameterwerte ein vorgegebenes weiteres Kriterium erfüllen.

2. Vorrichtung nach Anspruch 1, **dadurch gekennzeichnet, dass** die Steuereinheit (3) die elektrische Schaltung (1) nur dann in die Schutzbetriebsart umschaltet, wenn der erfasste Parameter vor dem Überschreiten des ersten Grenzwertes (GW1) vorgegebene Parameterbereiche durchlaufen hat.

3. Vorrichtung nach Anspruch 2, **dadurch gekennzeichnet, dass** die Steuereinheit (3) erfassten Parameterwerten Parameterbereichskennungen (K0,K1,K2,K3,K4, K5) zuordnet, die Parameterbereichskennungen in einem Speicher (5) abspeichert und die elektrische Schaltung nur dann in die Schutzbetriebsart umschaltet, wenn die Anzahl der abgespeicherten Parameterbereichskennungen oder ein aus den Parameterbereichskennungen abgeleiteter Zählwert einen vorgegebenen Wert aufweist.

4. Vorrichtung nach einem der vorhergehenden Ansprüche, **dadurch gekennzeichnet, dass** der vorgegebene Parameter eine Temperatur ist und die vorgegebenen Parameterbereiche Temperaturbereiche sind.

5. Vorrichtung nach einem der Ansprüche 1 - 3, **dadurch gekennzeichnet, dass** der vorgegebene Parameter ein Strom ist und die vorgegebenen Parameterbereiche Strombereiche sind.

6. Vorrichtung nach einem der Ansprüche 1 - 3, **dadurch gekennzeichnet, dass** der vorgegebene Parameter eine Spannung ist und die vorgegebenen Parameterbereiche Spannungsbereiche sind.

7. Vorrichtung nach Anspruch 1, **dadurch gekennzeichnet, dass** die Steuereinheit (3) die elektrische Schaltung (1) dann in ihren Normalbetrieb rückschaltet, wenn ein erfasster Parameterwert oder ein daraus abgeleiteter Wert einen zweiten Grenzwert (GW2) unterschreitet.

8. Vorrichtung nach Anspruch 7, **dadurch gekennzeichnet, dass** der zweite Grenzwert (GW2) derselbe Wert ist wie der erste Grenzwert (GW1) oder ein anderer Wert.

9. Vorrichtung nach Anspruch 8, **dadurch gekennzeichnet, dass** die Steuereinheit (3) bei einem Absinken des erfassten Parameterwertes unter den zweiten Grenzwert (GW2) den vor der Umschaltung der elektrischen Schaltung in die Schutzbetriebsart ermittelten Zählwert in Abhängigkeit vom erfassten aktuellen Parameterwert vermindert.

10. Vorrichtung nach Anspruch 8, **dadurch gekennzeichnet, dass** die Steuereinheit (3) bei einem Absinken des erfassten Parameterwertes unter den zweiten Grenzwert (GWZ) eine der im Speicher (5) abgespeicherten Parameterbereichskennungen löscht.

## Claims

1. Device for controlling the operation of an electrical circuit in a motor vehicle, comprising
- a protection circuit (2) which has a detection unit (4) and a control unit (3), wherein
- the detection unit (4) is provided for detecting the parameter values of a preset parameter during normal operating mode of the electrical circuit and
- the control unit (3) switches over the electrical circuit (1) from normal operating mode to a protective operating mode which causes a functional restriction of the electrical circuit, if the parameter value detected by the detection unit (4) exceeds a preset first threshold value (GW1), wherein
- the control unit (3) monitors successive parameter values of the preset parameter and
- the electrical circuit (1) only switches over to the protective operating mode if parameter values detected prior to the exceeding of the first threshold value (GW1) fulfil a preset criterion, **characterized in that** the control unit (3) also checks parameter values of the preset parameter detected during the protective operating mode by the detection unit (4) and switches back the electrical circuit (1) to its normal operating mode if the parameter values detected during the protective operating mode fulfil a preset further criterion.

2. Device according to claim 1, **characterized in that** the control unit (3) switches over the electrical circuit (1) to the protective operating mode only if the detected parameter has passed through preset parameter ranges prior to the exceeding of the first threshold value (GW1).

3. Device according to claim 2, **characterized in that** the control unit (3) assigns parameter range identifiers (K0, K1, K2, K3, K4, K5) to detected parameter values, stores the parameter range identifiers in a memory (5) and switches the electrical circuit over to the protective operating mode only if the number of stored parameter range identifiers or a counter value derived from the parameter range identifiers comprises a preset value.

4. Device according to any one of the preceding claims, **characterized in that** the preset parameter is a temperature and the preset parameter ranges are temperature ranges.

5. Device according to any one of claims 1 - 3, **characterized in that** the preset parameter is a current and the preset parameter ranges are current ranges.

6. Device according to any one of claims 1 - 3, **characterized in that** the preset parameter is a voltage and the preset parameter ranges are voltage ranges.

7. Device according to claim 1, **characterized in that** the control unit (3) switches the electrical circuit (1) back to its normal operating mode when a detected parameter value or a value derived therefrom falls below a second threshold value (GW2).

8. Device according to claim 7, **characterized in that** the second threshold value (GW2) is the same value as the first threshold value (GW1) or another value.

9. Device according to claim 8, **characterized in that** the control unit (3) reduces the counter value detected prior to the switching of the electrical circuit to the protective operating mode in dependence on the detected current parameter value when the detected parameter value falls below the second threshold value (GW2).

10. Device according to claim 8, **characterized in that** the control unit (3) deletes one of the parameter range identifiers stored in the memory (5) when the detected parameter value falls below the second threshold value (GWZ).

## Revendications

1. Dispositif pour commander le mode de fonctionnement d'un circuit électrique dans un véhicule automobile, comportant :
- un circuit de protection (2) comportant une unité de détection (4) et une unité de commande (3), dans lequel
- l'unité de détection (4) est destinée à détecter les valeurs de paramètre d'un paramètre prédéfini pendant le fonctionnement normal du circuit électrique et
- l'unité de commande (3) commute le circuit électrique (1) du fonctionnement normal à un mode de fonctionnement protégé entraînant une limitation fonctionnelle du circuit électrique, lorsque la valeur de paramètre détectée par l'unité de détection (4) passe au-dessus d'une première valeur limite (GW1) prédéfinie, dans lequel
- l'unité de commande (3) surveille des valeurs de paramètre consécutives du paramètre prédéfini et
- le circuit électrique (1) commute uniquement dans le mode de fonctionnement protégé lorsque des valeurs de paramètre détectées avant le dépassement de la première valeur limite (GW1) satisfont à un critère prédéfini, **caractérisé en ce que** pendant le mode de fonctionnement protégé, l'unité de commande (3) contrôle également des valeurs de paramètre du paramètre prédéfini détectées par l'unité de détection (4), et le circuit électrique (1) recommute dans son fonctionnement normal lorsque les valeurs de paramètre détectées pendant le mode de fonctionnement protégé satisfont à un autre critère prédéfini.

2. Dispositif selon la revendication 1, **caractérisé en ce que** l'unité de commande (3) commute uniquement dans le mode de fonctionnement protégé lorsque le paramètre détecté avant le dépassement de la première valeur limite (GW1) a franchi des plages de paramètres prédéfinies.

3. Dispositif selon la revendication 2, **caractérisé en ce que** l'unité de commande (3) attribue à des valeurs de paramètre détectées des identifiants de plage de paramètre (K0, K1, K2, K3, K4, K5), les identifiants de plage de paramètre sont enregistrés dans une mémoire (5) et le circuit électrique commute uniquement dans le mode de fonctionnement protégé lorsque le nombre des identifiants de plage de paramètre enregistrés ou une valeur de comptage déterminée à partir des identifiants de plage de paramètre a une valeur prédéfinie.

4. Dispositif selon l'une des revendications précédentes, **caractérisé en ce que** le paramètre prédéfini est une température et les plages de paramètre prédéfinies sont des plages de température.

5. Dispositif selon l'une des revendications 1 à 3, **caractérisé en ce que** le paramètre prédéfini est une intensité et les plages de paramètre prédéfinies sont des plages d'intensité.

6. Dispositif selon l'une des revendications 1 à 3, **caractérisé en ce que** le paramètre prédéfini est une tension et les plages de paramètre prédéfinies sont des plages de tension.

7. Dispositif selon la revendication 1, **caractérisé en ce que** l'unité de commande (3) recommute le circuit électrique (1) dans son fonctionnement normal lorsqu'une valeur de paramètre détectée ou une valeur déduite de celle-ci passe au-dessous d'une seconde valeur limite (GW2).

8. Dispositif selon la revendication 7, **caractérisé en ce que** la seconde valeur limite (GW2) a la même valeur que la première valeur limite (GW1) ou a une autre valeur.

9. Dispositif selon la revendication 8, **caractérisé en ce que** l'unité de commande (3), en cas de passage de la valeur de paramètre détectée au-dessous de la seconde valeur limite (GW2), réduit la valeur de comptage déterminée avant la commutation du circuit électrique dans le mode de fonctionnement protégé en fonction de la valeur de paramètre actuelle détectée.

10. Dispositif selon la revendication 8, **caractérisé en ce que** l'unité de commande (3), en cas de passage de la valeur de paramètre détectée au-dessous de la seconde valeur limite (GW2), supprime l'un des identificateurs de plage de paramètre enregistrés dans la mémoire (5).
